Europäisches Patentamt

European Patent Office

Office européen des brevets

(11) Publication number: **0 108 632**
**B1**

(12) # EUROPEAN PATENT SPECIFICATION

(45) Date of publication of patent specification: **19.04.89**

(21) Application number: **83306748.1**

(22) Date of filing: **04.11.83**

(51) Int. Cl.⁴: **B 32 B 31/00, C 03 C 27/12, B 32 B 7/14, C 09 J 5/00**

(54) Lamination process and apparatus.

(30) Priority: **05.11.82 CA 415020**

(43) Date of publication of application:
**16.05.84 Bulletin 84/20**

(45) Publication of the grant of the patent:
**19.04.89 Bulletin 89/16**

(84) Designated Contracting States:
**AT BE CH DE FR GB IT LI LU NL SE**

(56) References cited:
**EP-A-0 010 355**
**DE-A-2 040 221**
**DE-A-2 737 740**
**FR-A-2 216 339**
**FR-A-2 442 122**
**FR-A-2 445 222**
**GB-A-1 253 845**
**US-A-2 075 726**
**US-A-3 405 425**
**US-A-3 616 150**
**US-A-3 895 984**
**US-A-4 040 888**

(73) Proprietor: **DELTAGLASS S.A.**
**4 Route de Beaumont**
**CH-1700 Fribourg (CH)**

(72) Inventor: **McMaster, Dexter**
**1070 Elm Street**
**Perrysburg Ohio 43551 (US)**

(74) Representative: **Cropp, John Anthony David et al**
**MATHYS & SQUIRE 10 Fleet Street**
**London, EC4Y 1AY (GB)**

Courier Press, Leamington Spa, England.

## Description

This invention relates to processes for the lamination of sheets of material including sheets of glass with or without a substrate or interlayer, and apparatus suitable for use in carrying out such processes.

The invention is concerned more particularly with a process of joining sheets of material together, at least one of which sheets is a glass sheet, the process being of the kind comprising the steps of distributing liquid radiation-curable adhesive composition on one surface of one of the sheets at least proximate one side edge across the sheet, and applying another of said sheets to the adhesive covered sheet, applying pressure in a plane substantially normal to the plane of the sheets and parallel to said side edge while effecting relative movement between the sheets and the plane of pressure to squeeze adhesive along the sheets away from the plane of pressure application on the side of the plane of pressure application remote from said side edge to form a continuous film of adhesive while ensuring that the edge of the film on the side of the plane of pressure remote from said side edge is always spaced from the plane of pressure.

A process of the kind referred to above is described and illustrated in DE-A-2737740. In this known process sheets of glass are spaced apart end to end in a series on a continuous conveyor chain, adhesive is applied to the top surfaces of the sheets, a film of plastics is laid onto the adhesive coated surfaces, the glass sheets covered with the plastics film passed between pressure rollers, adhesive is applied to the top surface of the plastics film, a second series of glass sheets is successively applied to the film covered sheets on the conveyor with the superimposed sheets in registration, and the first and second sheets of glass between which the plastics film is sandwiched are then passed between further pressure rollers. The adhesive is then cured by infra-red lamps.

In the known process as described above, the pressure rollers ride up the leading edge of each pair of superimposed sheets and squeeze the adhesive towards the trailing edge of the sheets. Little or no adhesive is squeezed in the forwards direction out of the leading edge of the sheets, and gaps and air bubbles tend to form in the layer of adhesive between the leading edge portions of the sheets.

According to the present invention there is provided a process of the kind referred to above, wherein the pressure is applied initially against the sheets proximate to but spaced from said side edge to squeeze adhesive towards the side edge filling any gap between the sheets between the position of initial pressure application and the side edge. In a case in which it is the sheets which are movable relative to the plane of pressure, the above mentioned side edge will be the leading edge of the sheets in the direction of movement.

The liquid adhesive composition distributed on the surface of one of the sheets preferably comprises a ribbon of adhesive extending across the sheet proximate said side edge and a plurality of ribbons extending normal or substantially normal to the ribbon extending across the sheet away from said side edge at least for a portion of the length of the sheet. The radiation-curable adhesive composition is preferably photopolymerisable.

To ensure that the edge of the film of adhesive on the side of the plane of pressure application remote from the side edge never passes through the plane of pressure application towards the side edge, the applied pressure and the speed of the relative movement between the sheets of material and the plane of pressure are carefully controlled and adjusted relative to one another. This control is dependent upon the amount of liquid adhesive deposited on the material and the pattern of such distribution.

In the lamination of sheets of glass with a substrate or interlayer, the liquid adhesive composition may be distributed on one surface of the sheet of substrate, one of the sheets of glass applied to the surface of the substrate carrying the adhesive, and the pressure applied by spaced rollers applied to the surface of the sheet of glass remote the substrate and to the surface of the substrate remote the sheet of glass. The sheet of substrate or interlayer preferably has a length and width greater than the length and width of the glass sheet with the edges of the substrate extending beyond the side edges of the glass sheet and, upon application of the pressure against the outer surfaces of each of the substrate and glass sheet, liquid adhesive composition is expressed from between the substrate and glass sheet onto the substrate extending beyond the glass sheet. The substrate may be carried on a carrier disposed in a horizontal plane and one of the glass sheets placed on top of the substrate after deposition of the adhesive on the substrate. After the irradiation of the adhesive film between the glass sheet and substrate, the combination is turned over and the process steps repeated with the application of a second sheet of glass on top of the substrate to which adhesive has been applied. The second sheet when applied to the substrate, is aligned with the bottom sheet of glass. After the second irradiation with both glass sheets now secured to the oversized sheet of substrate, the substrate is trimmed and finished. Because the adhesive expressed from between the glass sheets and substrate onto the substrate has been hardened (for example, polymerized) by irradiation, the hardened adhesive composition expressed from between the glass sheets and substrate, is effectively disposed of when the substrate is trimmed.

In a process for the manufacture of laminated glass comprising two sheets of glass and a sheet of substrate or interlayer therebetween, in accordance with the present invention, the glass sheets may be placed side by side in a horizontal plane with each sheet having an inner edge closer the other sheet, the liquid adhesive applied to the top surface of each sheet proximate the outer side edge thereof and, after the substrate is applied to one of the sheets of glass, the sheets of glass are pivoted about their inner edges in a vertical direction for sandwiching the substrate between the glass sheets, and the combination fed vertically through a series of pressure rollers oriented with their axes extending horizontally. Alternatively, the glass sheets may be placed side by side in a horizontal plane with side edges thereof in alignment, the liquid adhesive applied to the top surface of each sheet proximate said aligned side edges and, after the substrate is applied to one of the sheets of glass, the glass sheets are pivoted about their adjacent edges in a vertical direction for sandwiching the substrate between the glass sheets, and the combination is fed horizontally through a series of pressure rollers oriented with their axes extending vertically.

Where the pressure is applied vertically, the spaced rollers are preferably of greater length than the width of the glass to ensure uniform application of pressure.

Where the pressure is applied horizontally by the rollers, and the substrate and glass oriented vertically, the roller surfaces engaging the substrate and glass are preferably of less length than the width of a glass passing therebetween so that any adhesive expressed from between the glass and the substrate would not be transferred to the surface of the roller in contact with the substrate and glass. In one embodiment, the roller is about 10mm shorter on each side or about 20mm shorter than the width of the glass. In this case, the pressure on the remainder of the glass is transferred to the sides through the glass portions not engaged by the rollers.

According to the invention there is also provided apparatus for joining sheets of material, one of which is a glass sheet, by liquid radiation-curable adhesive composition distributed on a surface of one of the sheets at least approximate one side edge thereof across the sheet, the apparatus comprising a pair of opposing rollers for applying pressure to said sheets in a plane of pressure substantially normal to the planes of the sheets, a conveyor for feeding the sheets between the rollers with said side edge parallel to the rollers and forming part of the leading edge of the moving sheets, drive means opperable to rotate the rollers to move the sheets through the plane of pressure while the rollers apply pressure to the sheets, and radiation generating means to cure the adhesive composition by irradiation after passage through the plane of pressure, the apparatus being characterised by a control system for causing the rollers to be separated to permit the sheets to be positioned in the plane of pressure and thereafter to apply the rollers against the sheets proximate to but spaced from and parallel to the leading edge thereof.

In a preferred construction of the apparatus of the invention the rollers are disposed horizontally one above the other with the upper roller movable towards and away from the lower roller which is fixed. Preferably, the upper roller is movable towards and away from the lower roller by an L-shaped roller pivot arm or lever pivotable about a pivot point, one end of the arm or lever being secured to the upper roller and the other end of the arm or lever being secured to a cylinder (preferably an air cylinder) operable to pivot the arm or lever about the pivot point. The drive means preferably comprises at least one pair of driven gears, one driven gear of each pair being secured to each roller, with each driven gear driven by a separate one of a pair of meshed drive gears, meshed with one another for driving the driven gears, the centre of rotation of the drive gear which is drivably connected to the driven gear on the movable upper roller coinciding with the pivot point. Thus, as the cylinder pivots the lever, the upper roller is elevated and lowered relative to the lower roller without disengagement of the upper drive gear and lower drive gear which reduces the possibility of slippage of the sheets of glass, substrate and carrier passing therebetween. In this manner the opening between the rollers may be adjusted.

An air cylinder is most preferable for the operation and control of the lever as opposed to a hydraulic cylinder because the compressibility of the air cushions the use of the lever.

With the opening between the rollers set, it is preferable that the rollers be acted upon quickly to enable the sheets of material to be engaged by the rollers, to be easily placed between the rollers and after the placing of the materials between the rollers, it is preferable that the rollers be repositioned to that preset opening just as quickly. To this end, according to another aspect of the invention, the position of the L-shaped lever can be set employing cam means, preferably an air cylinder controlled cam to locate the arm in a predetermined manner, preferably by the action of an air cylinder on the cam to control the position of the L-shaped lever.

Once the rollers have acted on the sheets of glass, because of the tendency of the glass (and particularly tempered glass to react to the applied pressure at its center) to try to separate, the sheets are preferably bonded together immediately after the applied pressure by the rollers. To this end, the adhesive and the sheets are irradiated as soon as the pressed sheets leave the rollers. A conveyor (preferably a roller conveyor) picks up the sheets as they leave the rollers, again imparting the same speed to the sheets as the pressure rollers have applied.

Therefore, means for irradiating the glass (for example u.v. radiation applied by u.v. lamps) is situate to radiate the portions of the glass sheet as those portions leave the rollers until the entire combination is irradiated. Therefore, where drive means for example, in the form of drive gears are employed to drive or rotate the rollers, the drive means or drive gears are disposed so as not to space the rollers and the means for irradiating of the sheets of glass and adhesive and where a conveyor is provided, the drive means or gears are positioned between the rollers and conveyor.

Where the glass sheets are to be fed vertically between a pair of horizontally extending rollers, the source of irradiation is immediately after the rollers and where drive gears are used to drive these rollers, the gears are disposed so as not to space the rollers and the means for irradiating.

Embodiments of the invention will now be described, by way of example, with reference to the accompanying drawings, in which:

Figure 1 is a perspective view illustrating one of the steps of the process of the invention for laminating glass,

Figure 2 is a schematic side view of apparatus used to carry out one of the steps of the process;

Figure 3 is a top view of part of the apparatus shown in Figure 2 in operation;

Figure 4 is a schematic view illustrating another of the steps of the illustrated process;

Figure 5 is a schematic perspective view illustrating another of the steps of the process;

Figure 6 is a schematic side view of the apparatus of Figure 2 used to carry out other steps of the process;

Figure 7 is a schematic perspective view of the apparatus of Figure 2;

Figure 8 is a schematic perspective view illustrating one of the steps of the process;

Figure 9 is a perspective view of an apparatus according to an embodiment of the invention;

Figure 10 is a perspective schematic view of the essentials of apparatus and conveyor systems according to another embodiment of the invention;

Figure 12 is a perspective view of apparatus incorporating a portion of the apparatus shown in Figure 10;

Figure 13 is a schematic view of components of the apparatus shown in Figure 12;

Figures 14 through 16 inclusive are perspective views of parts of the apparatus shown in Figure 12;

Figure 17 is a perspective partly sectioned view of a composite glass substrate structure;

Figure 18 is a perspective view of an adhesive applicator;

Figure 19 is a close-up view of part of the structure shown in Figure 18;

Figures 20 through 23 inclusive illustrate various components used in the structure shown in Figure 19;

Figures 24 and 25 are schematic views illustrating process steps for laminating glass according to other embodiments of the invention.

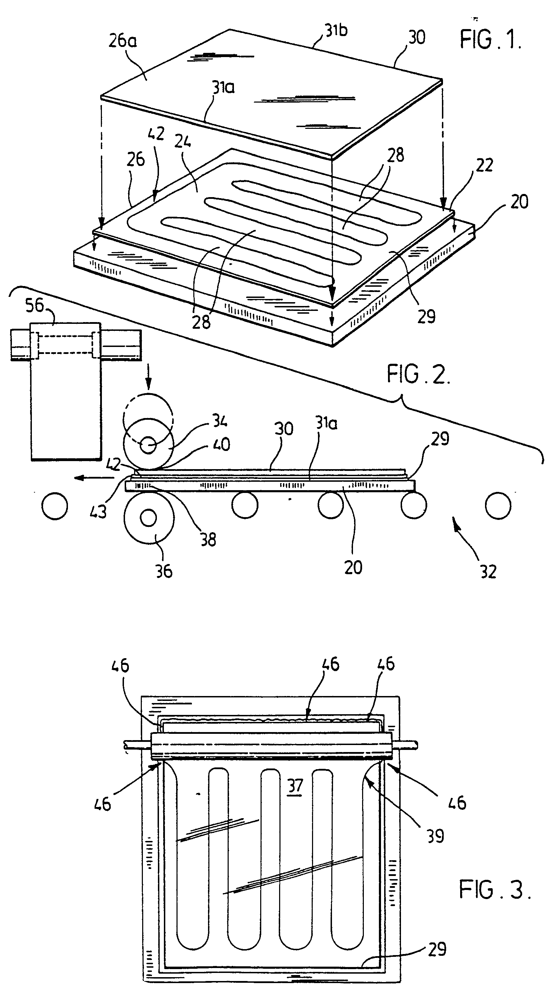

With reference to Figures 1 through 8 inclusive, a process for the lamination of sheets of glass according to an embodiment of the invention is illustrated together with apparatus and components for the apparatus, suitable for use to carry out the process.

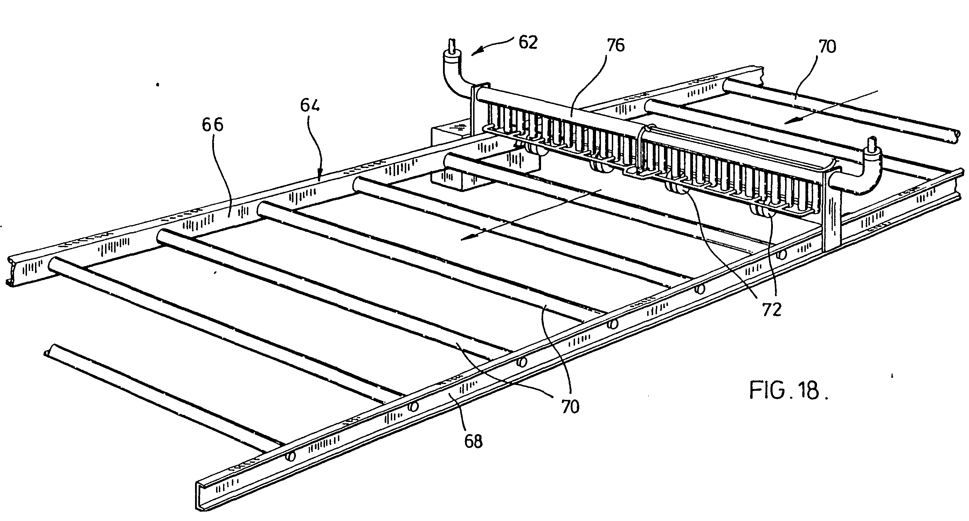

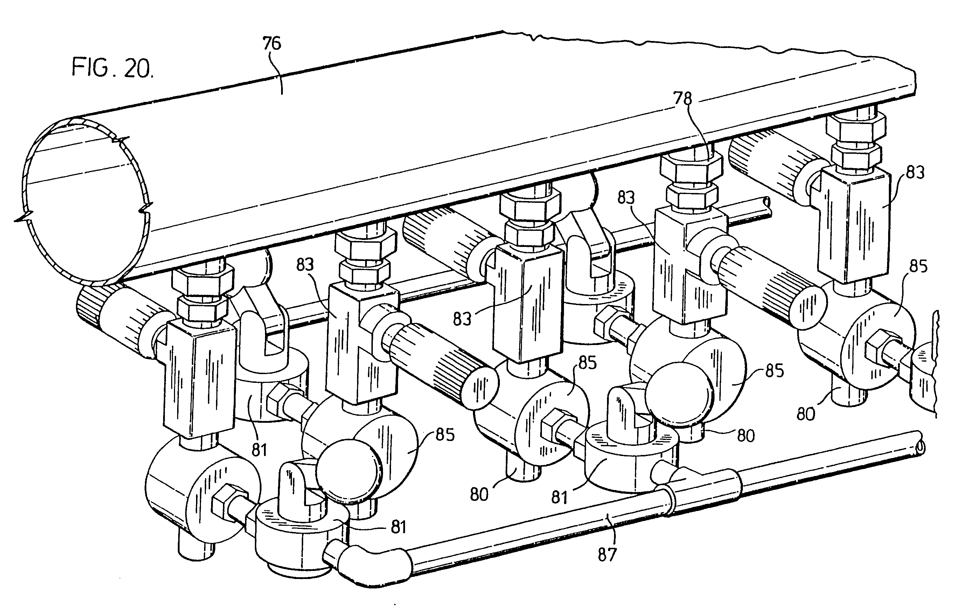

Particularly, with reference to Figure 1, there is shown carrier 20, carrying a sheet of transparent PVC interlayer material 22, to which has been applied a ribbon of adhesive 24 extending across the interlayer 22 proximate side edge 26 and a plurality of ribbons 28 extending from ribbon 24 towards the rearmost edge 29 of interlayer or substrate 22. Liquid photopolymerisable adhesive composition was applied at ribbons 24 and 28 by the apparatus shown in Figures 18 to 23 inclusive, as will be more particularly described hereinafter.

As shown in Figure 1, glass sheet 30 of lesser length and width than interlayer or substrate 22 is oriented with side edge 26a positioned proximate to, but spaced from, side edge 26 of substrate or interlayer 22 and thereafter, applied on substrate 22 to cover ribbons of adhesive 24 and 28, with substrate material extending from below each of the sides of glass sheet 30.

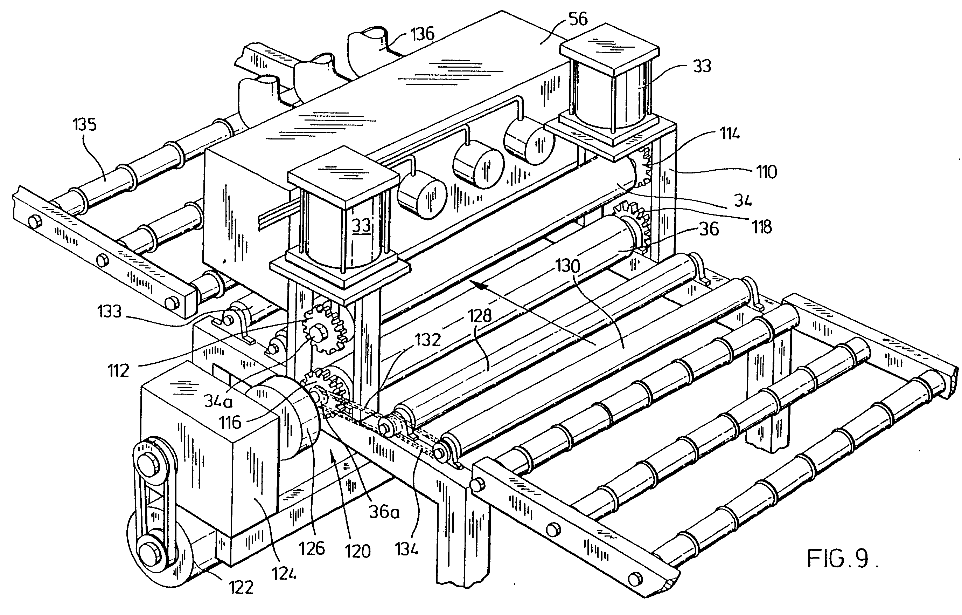

With reference to Figure 2, carrier 20 carrying interlayer or substrate 22 and glass sheet 30 is positioned on conveyor 32 and driven to a position between vertically spaced rollers 34 and 36 (upper roller 34 being moveable vertically relative to lower roller 36) so that edge 26a is just in advance (about 1″ or 2.5 cm.) of the area of contact of upper roller 34 on glass sheet 30 when uper roller 34 is lowered onto sheet 30 from the raised dotted position as shown in Figure 2 to the position shown, in the solid line, and pressure applied by air cylinder 33 (See Figure 9) causing pressure to be applied by rollers 34 and 36 to carrier 20 at 38 and on glass sheet 30 at 40, squeezing adhesive (i) towards side edge 26a to fill gap 42 (Figure 2) and express adhesive onto substrate 22 as at 43, (ii) laterally from the sides of sheet 30 at 31a and 31b onto the portion of the substrate 22 extending beyond the sides of the glass sheet 30 proximate side edge 26a and (iii) rearwardly towards edge 29 of substrate sheet 22 providing a continuous film 37 (See Figure 3) of adhesive on the side of rollers 34 and 36 remote edge 26a extending across substrate 22 under glass sheet 30 between edges 31a and 31b and expressing adhesive onto substrate 22 as at 46.

Thereafter, the rollers are rotated by drive means (not shown) to feed the carrier-glass sheet-substrate combination in the direction towards leading edge 26a at a predetermined speed and at a predetermined applied roller pressure directed normal to the plane of the sheet of glass, substrate and carrier to cause edge 39 (See Figure 3) of the adhesive film 37 on the side of the pressure rollers 34 and 36 remote side edge 26 to be spaced from the plane or zone of roller pressure application at all times until the combination has been entirely passed through the plane of pressure applied by rollers 34 and 36, to uniformly spread the adhesive between the sheets, eliminate air bubbles and express adhesive from between the glass sheet 30 and substrate 22 as the film adhesive was pushed towards rear edge 29 from side edges 31a and 31b of glass 30 and rear edge 29 onto substrate 22 as at 46 (See Figure 3).

After adhesive has been uniformly spread in the manner previously described between the glass sheet 30 and substrate 22 the sheet is irradiated with ultra violet radiation by passing the combination below parabolic reflector 56 carrying U.V. Lamps (not shown) whereat the adhesive composition polymerizes securing the glass sheet to the substrate. At the same time, expressed adhesive material 46 collected on the interlayer or substrate 22 extending beyond the edges of glass sheet 30 is polymerized by the ultra violet radiation.

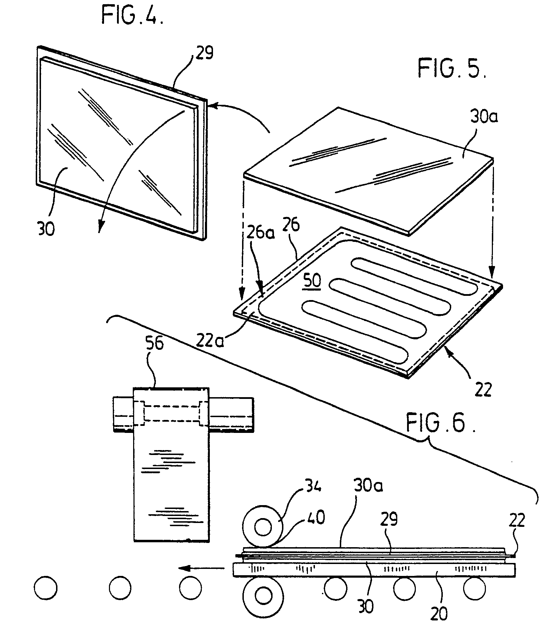

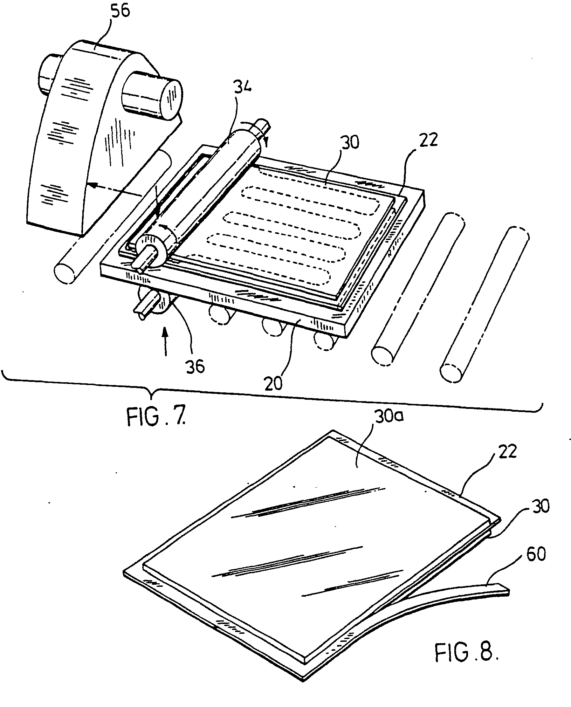

Thereafter, glass sheet 30-substrate 22 combination is turned over (See Figure 4), cleaned, and liquid photopolymerisable adhesive composition is applied thereto in the same manner as previously described. Particularly, adhesive 50 is deposited on surface 22a of substrate 22 proximate side edge 26 spaced from the edge thereof and spaced from edge 26a of lower glass sheet 30 previously secured to the other side of substrate 22. Thereafter, sheet of glass 30a aligned with sheet of glass 30 is applied to the adhesive (See Figure 5) and passed between rollers 34 and 36 (See Figures 6 and 7) (adjusted to have a larger spacing therebetween) in the same manner as the combination shown in Figure 2 was passed between rollers 34 and 36. (See Figures 5, 6 and 7).

After irradiation by ultra violet radiation by ultra violet lamps (not shown) secured in parabolic reflector 56, the substrate material extending from the side edges of the laminated glass sheet as for example, at 60 (See Figure 8) is trimmed and the glass sheet appropriately finished.

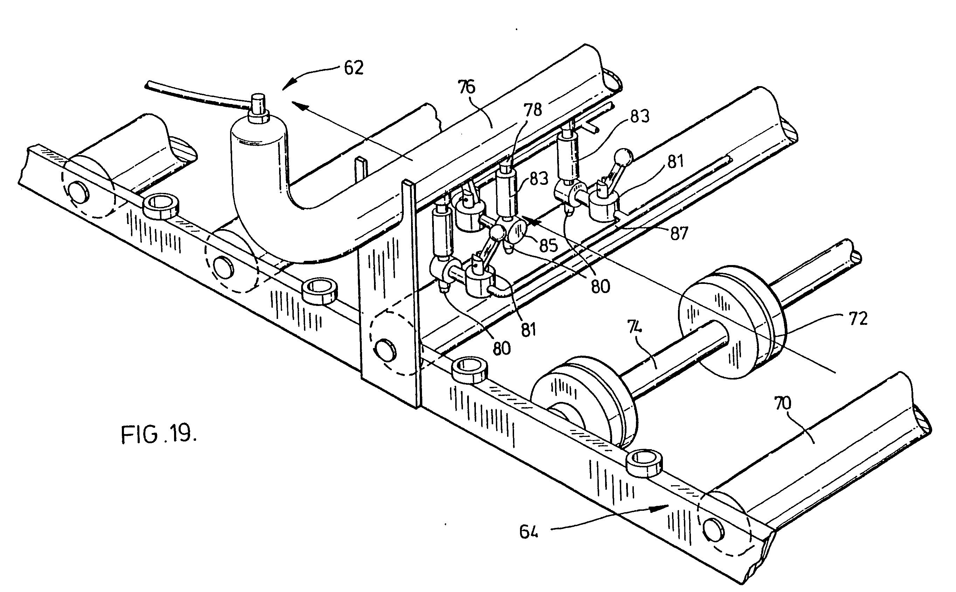

With reference to Figures 18 to 23 inclusive, there is shown adhesive applicator 62 set over conveyor 64, conveyor 64 comprising a pair of rails 66 and 68, rollers 70 and drive rollers 72, (See Figure 19) on common shaft 74 for driving what is carried by the conveyor by drive means (not shown) controlled by control means (not shown) below adhesive applicator 62. A limit switch (not shown) stops the progress of the materials carried on the conveyor 64 at a predetermined position below applicator 62. Applicator 62 comprises a reservoir for liquid adhesive (not shown), manifold 76 having outlets 78 spaced at two inch centers from one another across manifold 76, each outlet 78 secured to a nozzle 80 "enabled" or "disabled" with respect to the flow of liquid photopolymerisable adhesive composition therethrough by means of lever operated pilot control valve 81 which either "allows" or "disallows" an air pilot signal from circuit 87 to the pilot operated valve 85 which controls the flow of adhesive. The flow rate of the adhesive through any nozzle 80 is further controlled by an adjustable needle valve 83 in-line with valve 85 and nozzle 80.

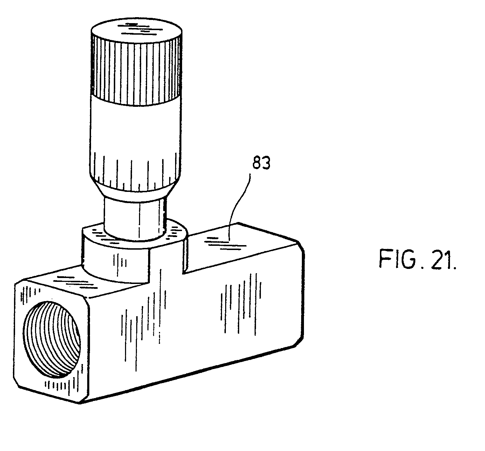

With reference to Figure 21, needle valve 83 comprises Alkon® JN1 adjustable needle valve.

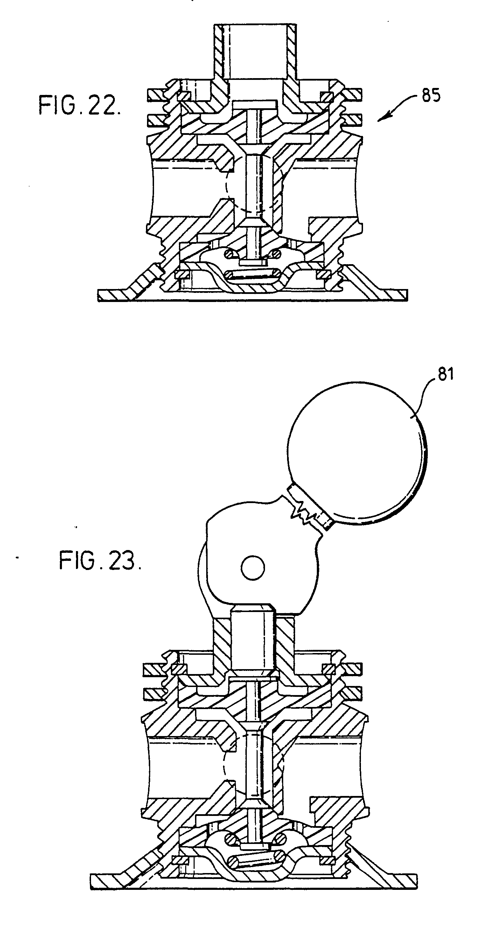

With reference to Figure 22, pilot operated valve 85 comprises model 125A Humphrey® normally closed pilot valve.

With reference to Figure 23, lever operated pilot control valve 81 comprises model 125V Humphrey® valve having positive detent in closed and open position, an actuator that can be rotated 360°, and toggle throw.

With respect to the application of the adhesive in the patterns shown in Figure 1 (carrier 20 carrying substrate 22) and 5 (carrier 20 carrying the combination of glass sheet 30 below substrate 22), carrier 20 is moved by rollers 72 until carrier 20 engages a limit switch (not shown) positioning nozzles 80 over substrate 22 spaced from, but proximate edge 26 to be within the surface area to be covered, in the case of Figure 1, by glass sheet 30, and in the case of Figure 5, by glass sheet 30a, proximate edges 26a. Thereafter, by activating certain ones of valves 85 by means of the lever operated pilot control valves 81, adhesive composition is released through each of nozzles 80 for a certain predetermined period of time controlled by control means (not shown) creating an accumulation of adhesive proximate side edge 26 which accumulation from each of nozzles 80 flows one into the other creating ribbon of adhesive 24.

After a specified delay, carrier 20 carrying substrate 22 is driven below valves 85 which deposit ribbons of adhesive 28 (shown in Figure 1). Thereafter, valves 85 are disabled stopping the flow of adhesive. Carrier 20 is then moved to its next position whereat the glass is applied (See Figures 1 and 5) and then between rollers 34 and 36 for the application of pressure for the spreading of the adhesive.

With reference to Figure 9, rollers 34 and 36 comprising resilient rubber material, are mounted in frame 110 for vertical reciprocation of roller 34 relative to roller 36 which is fixed but free to rotate by air cylinders 33 between a lowered position with the roller surface of rollers 34 and 36 touching, to a raised position with roller 34 spaced from roller 36. Journaled for rotation on the end of shafts 34a and 36a carrying rollers 34 and 36 respectively, are gears 112, 114, 116 and 118 having a slightly greater outer diameter than rollers 34 and 36, gears 112 and 116, and gears 114 and 118, for intermeshing when roller 34 is lowered towards roller 36.

Roller 36 is rotated as shaft 36a is rotated by drive 120 comprising electric motor 122, gear box 124 and coupling 126. Feed rollers 128 and 130 are rotated by chains 132 and 134 secured to be operated by the rotation of shaft 36a to feed carrier 20 towards rollers 34 and 36 at the same velocity as the velocity of the outer surface of rollers 34 and 36. By adjusting the velocity of the roller 36 driven by direct drive 120, and the vertical pressure exerted by air cylinders 33, the edge 39 of film 37 (See Figure 3) on the side of the rollers 34 and 36 remote leading edges 26 and 26a of substrate 22 and either of glass sheets 30 and 30a (as the case may be) is spaced from roller 34 at all times as the substrate-glass sheet combination is fed through the rollers until the combination has passed between the position (plane or zone) of pressure application. By varying the speed of the drive 120 or the pressure of the rollers the spacing of edge 39 of adhesive film 37 from the plane or zone of pressure created by rollers 34 and 36, is controlled ensuring thorough uniform application of the adhesive between the substrate and glass sheet and complete elimination of air bubbles from between the sheet of glass and substrate. Upon completion of the uniform spreading of the adhesive between the glass and substrate, the combination is immediately moved by pick-up rollers 133 (See Figure 9) below parabolic reflector 56, carrying ultra violet lamps (not shown) whereat the adhesive is polymerized. Conveyor 135 leading away from below reflector 56 takes away the polymerized product. Exhausts 136 lead from parabolic reflector 56 for dispersing the heat generated.

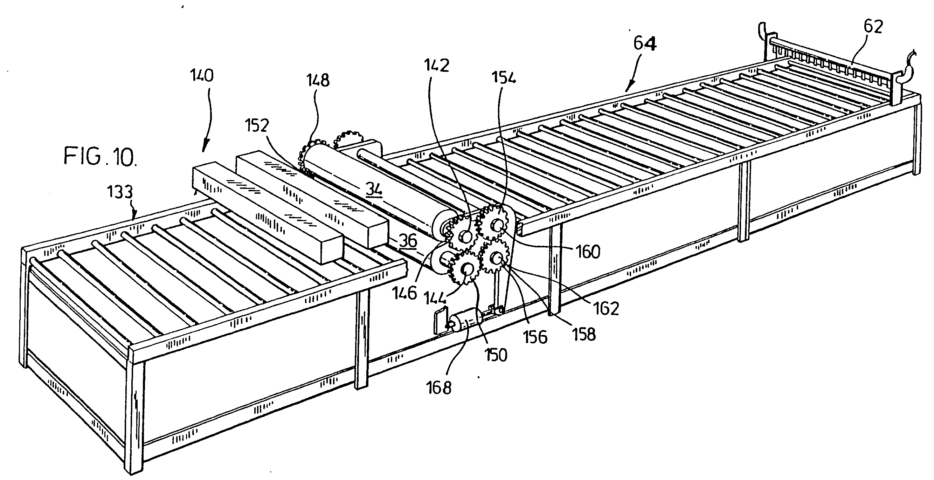

Figure 10 illustrates schematically a preferred system used for the manufacture of laminated glass comprising adhesive applicator 62, conveyor 64, roller 34 and 36, ultraviolet lamps 140 immediately after rollers 34 and 36, and take up rollers 133.

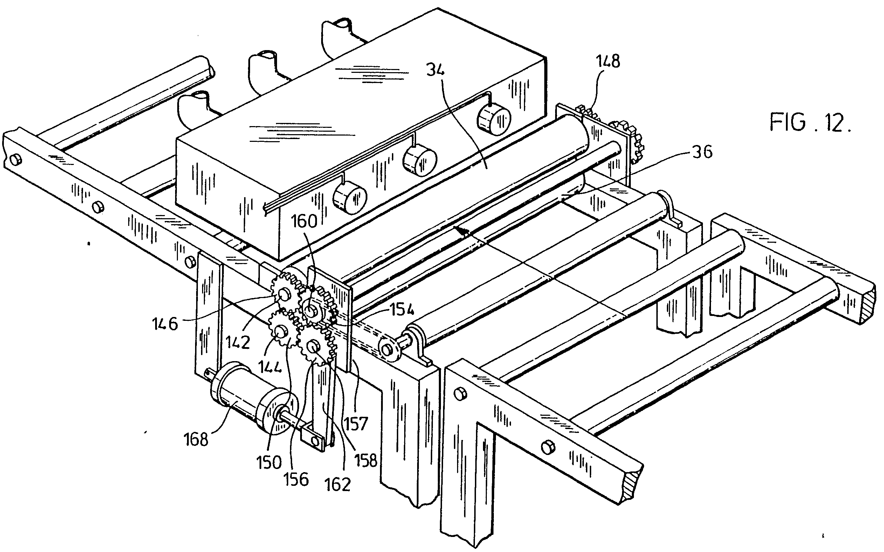

With reference to Figures 10, 12 and 13, rollers 34 and 36 are mounted and operated in a manner to reduce the possibility of slippage of the sheets of glass, substrate and carrier relative to one another during the application of pressure by the rollers and the movement of the combination between the rollers. Particularly, rollers 34 and 36 are journalled for rotation about axes 142 and 144 respectively with roller 36 fixed and roller 34 vertically moveable with respect to roller 36. Four gears, three of which are shown at 146, 148, and 150 are secured to both ends of axes 142 and 144, gears 146 and 148 to axis 142 and gears 150 and the other gear (not shown) to axis 144. On one side of rollers 34 and 36 gears 146 and 150 are driven synchronously with one another by meshed gears 154 and 156 on the side of rollers 34 and 36 remote ultraviolet lamps 140, gear 154 meshed with driving gear 146 and gear 156 meshed with, and driving gear 150. Gear 146 is secured to one end of L-shaped lever arm 162, in turn secured to, and pivotable about axis 160 about which gear 154 rotates. Roller 36 and gear 150 are fixed in position on axis 144 but are free to rotate. Roller 34 and gears 146 and 148 fixed on axis 142, are secured to lever arm 162 to pivot about axis 160 as lever arm 162 pivots raising and lowering roller 34 and associated gears 146 and 148, with respect to roller 36 and gear 150. Both gears 150 and 156 are fixed in stationary frame member 157 (see Figure 12) for rotation about axes 144 and 158 respectively. Air cylinder 168 is secured to arm 162 to pivot L-shaped lever arm 162 about axis 160. A like gear train, L-shaped lever arm and air cylinder are provided on the other side of the frame to assist in the pivoting of roller 34 about axis 160 and drive gears 148 and 152. (Therefore, any discussion to the assembly on one side of rollers 34 and 36 applies equally to the assembly on the other side of rollers 34 and 36).

In use, roller 34 is raised by the action of cylinder 168 on arm 162 drawing arm 162 towards cylinder 168, rotating roller 34 and gears 146 and 148 about axis 160 spacing roller 34 from roller 36. When roller 34 is to be lowered to a different position, a predetermined distance above roller 36, cylinder 168 is activated pushing arm 162 away from cylinder 168, causing arm 162 to pivot about axis 160.

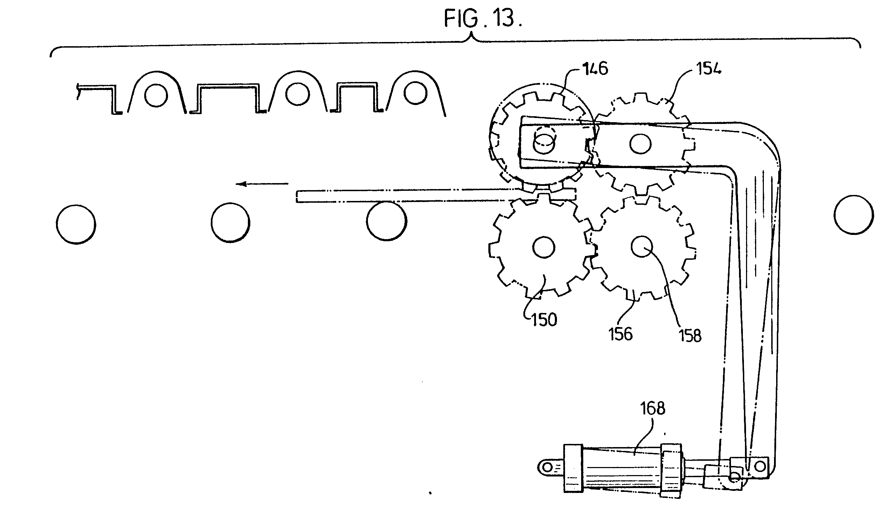

With reference to Figures 12 and 13, it can be seen that as L-shaped lever 162 is pivoted about axis 160 as cylinder 168 acts on arm 162 pushing or pulling lever 162 away from, or towards, cylinder 168 as the case may be, roller 34 will be raised or lowered while the gear train (comprising gears 146, 154, 156 and 150) remains engaged, thereby reducing the possiblity of relative slippage of the sheets of glass, carrier and substrate when the combination is passed between the rollers.

For driving gears 146, 154, 156 and 150, a drive similar to drive 120 comprising electric motor, gear box and coupling for securing to axis 158 about which gear 156 rotates, is used to drive gear 156 and thus gear 154, which gears in turn drive gears 150 and 146 respectively.

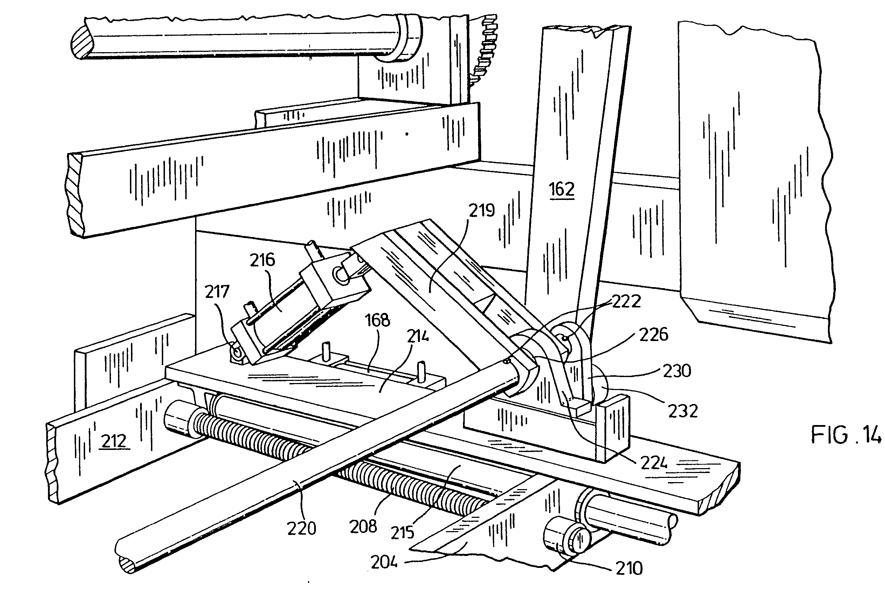

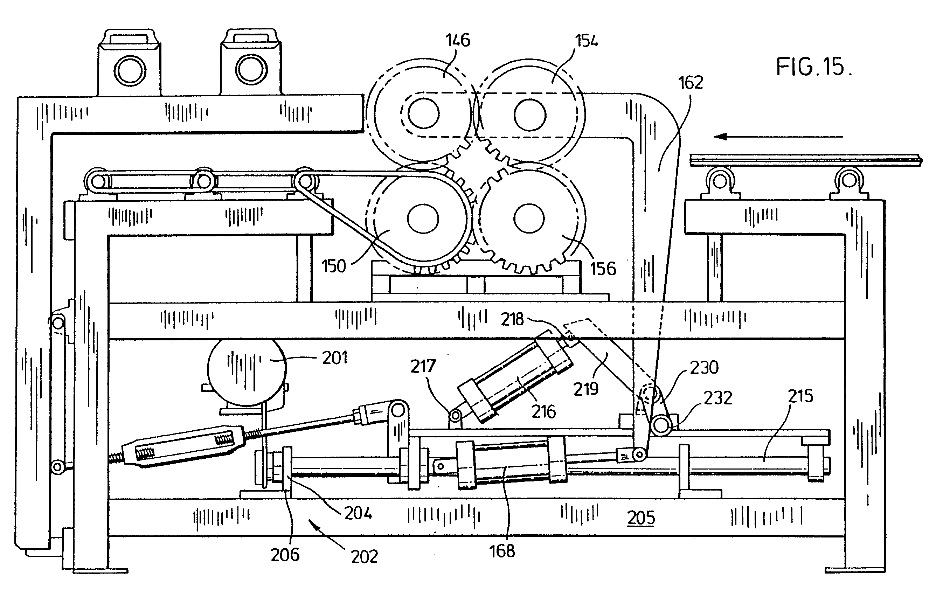

For adjusting the opening between rollers 34 and 36 to permit laminations of various thicknesses to pass therethrough under the pressure to be applied by rollers 34 and 36, the position of rollers 34 and 36 relative to one another are adjusted by the raising and lowering of roller 34 with respect to roller 36 by the action of cylinder 168 on arm 162. To preclude having to reset the opening between the rollers with the introduction of each combination of the same thickness to be laminated, additional equipment is provided as shown in Figure 14, 15, and 16. With respect thereto, cylinder 168 is secured to frame 202 with arm 162 connected to cylinder 168. Frame 202 supports motor 201 and transverse beam 204 secured to bottom frame beam members 205 at 206 on either side of frame 202.

Motor 201 synchronously drives longitudinally extending screws on either side of motor 201 (one of which screws is shown at 208) by cogs (not shown) to pass through threaded conduit 210 through transverse beam 204 causing transverse member 212 (secured to each of screws 208) and longitudinally extending platforms 214 (only one of which is shown) carried proximate either transverse side of frame 202 to be moved longitudinally of the frame. Smooth shafts or rods 215 (one on either side secured to frame 202) pass through members 212 and 204 proximate either transverse end of each member 212 and 204 for supporting weight. Each platform 214 (one on either side of frame 202) pivotally supports air cylinder 216 at 217. Cylinder 216 is pivotally secured at its operative end 218 to arm 219 fixed to transversely extending shaft 220 by pins 222. Each platform 214 carries shaft support 224 having aperture 226 therethrough for supporting and carrying shaft 220.

Radially extending arm 230 extends radially from the end of shaft 220 and secures cam 232 at its end in the same longitudinally extending plane as arm 162 for pushing against arm 162 to drive one end towards cylinder 168 against pressure in cylinder 168.

When it is desired to space rollers 34 and 36 by a predetermined distance for the passage of glass therebetween, arm 162 is pivoted on axis 160 to bring rollers 34 and 36 to the predetermined spaced distance. For rapid "opening" and "closing" of the rollers relative to this preset position cylinder 216 is activated rotating arm 230 and cam 232 rotating arm 162 to either "open" the rollers from the preset spaced position enabling sheet material to be easily positioned or "close" the rollers to the preset spaced position onto the material to be acted upon by the rollers. Adjustment of the relative position of platform 214 may be made by activating motor 201 and threaded rods 208 as desired.

These adjustments may be automated by a control system (not shown) for causing roller 34 to be raised to permit the combination glass-adhesive substrate to be positioned in the plane of pressure and thereafter, roller 34 lowered onto the combination glass-adhesive-substrate combination proximate the leading edge of the combination (See Figure 2) to the preset position.

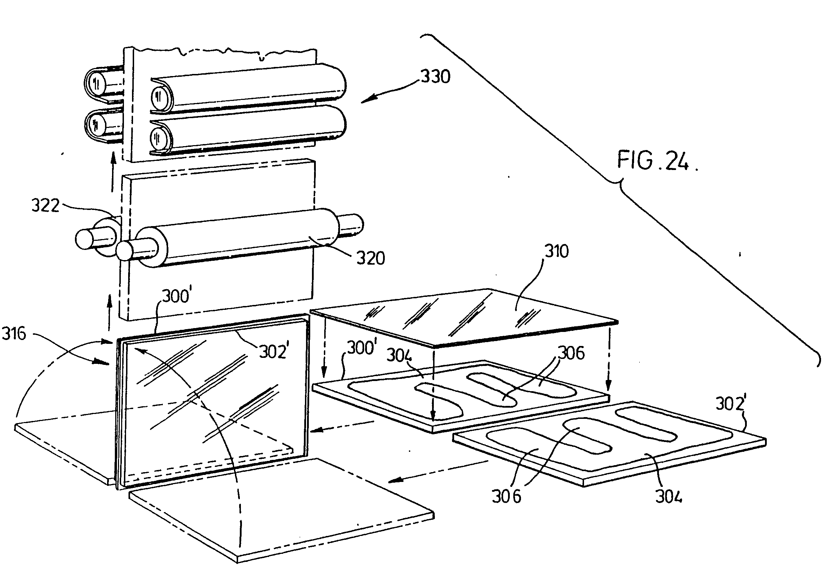

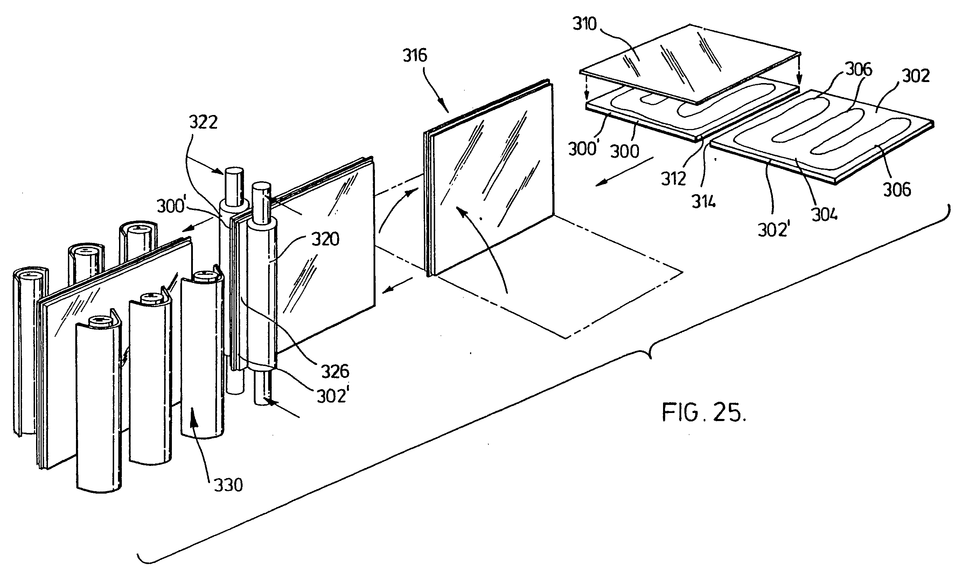

With reference to Figures 24 and 25, there is shown schematically two additional processes for the lamination of glass.

With respect to Figure 25, two glass sheets 300 and 302 of identical shape and size have adhesive deposited on their upper surface to provide a ribbon of adhesive 304 proximate side edges 300 and 302 and ribbons of adhesive 306 extending from each of ribbons 304 away from edges 300 and 302. A sheet of substrate 310 is then applied to glass sheet 300 and the sheets of glass 300 and 302 pivoted on their side edges 312 and 314 closer to the other sheet and sandwiched together as at 316 in Figure 25 to be oriented vertically. Thereafter, the combination is positioned between vertically oriented rollers 320 and 322 (of lesser length than the width of the sheets of glass) with edges 300 and 302 positioned just beyond (downstream of) rollers 320 and 322 with rollers 320 and 322 spaced from the surfaces. Thereafter rollers 320 and 322 are brought to bear on the surfaces of the glass providing the requisite plane or zone of pressure to force adhesive to fill the gap 326 between the glass surfaces and substrate in advance of the plane of pressure by rollers 320 and 322 and leading edges 300 and 302 expressing adhesive therefrom. Because the rollers are of lesser length than the width of the glass (See Figure 25) any adhesive expressed does not collect on the roller. At the same time, continuous films of adhesive are formed between the substrate and sheets of glass on the side of the plane of pressure application (created by the rollers) remote sides 300 and 302 with the edge of each of the two continuous films extending across the sheets of glass 300 and 302 between the sheets of glass 300 and 302 and the substrate 310, spaced from the plane of pressure application. Thereafter, rollers 320 and 322 are rotated to move the combination therebetween in such a manner to ensure the edge of the film remote the position (plane or zone) of pressure was always spaced from the position (plane or zone) of pressure application until the combination has passed through the plane of pressure application to, uniformly spread the adhesive between the substrate and sheets of glass, and eliminate air bubbles. Thereafter, the adhesive is irradiated by U.V. Lamps 330 and the expressed polymerized adhesive cleaned from the sides of the laminated glass.

With reference to Figure 24, the only difference from the schematic of the process steps illustrated in Figure 24 from those in Figure 25 is that the combination is fed vertically through the rollers and between the ultra violet lamps.

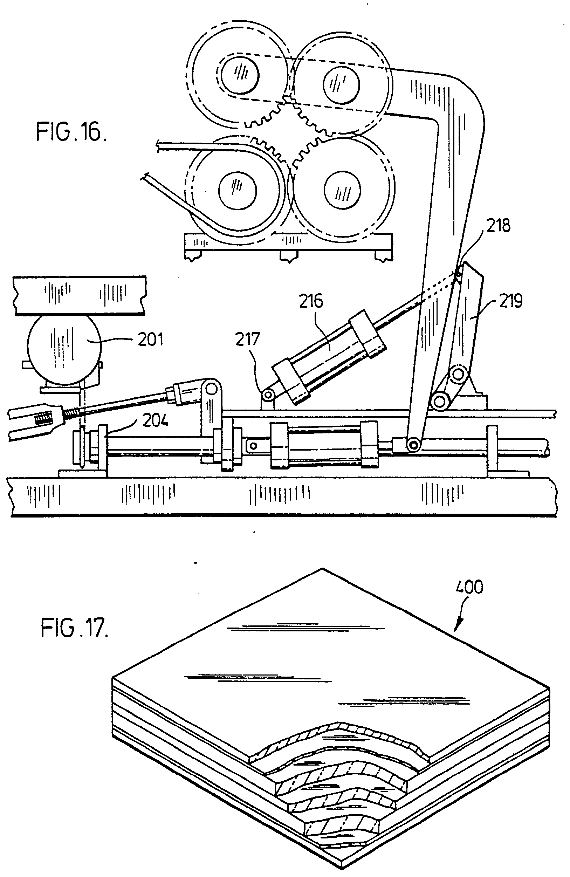

With reference to Figure 17, multi-laminated glass 400 is shown, manufactured in accordance with a process according to an embodiment of the invention comprising five (5) sheets of glass and two (2) sheets substrate secured together by photopolymerized adhesive.

## Claims

1. A process of joining sheets of material (22, 30:300, 310) together, at least one of which sheets (30:300) is a glass sheet, the process comprising the steps of distributing liquid radiation-curable adhesive composition (24, 28:304, 306) on one surface of one of the sheets (22:300) at least proximate one side edge (26:300') across the sheet, applying another of said sheets (30:310) to the adhesive covered sheet (22, 300), and applying pressure in a plane substantially normal to the plane of the sheets and parallel to said side edge (26:300') while effecting relative movement between the sheets and the plane of pressure to squeeze adhesive along the sheets away from the plane of pressure application on the side of the plane of pressure application remote from said side edge (26:300') to form a continuous film of adhesive while ensuring that the edge of the film on the side of the plane of pressure remote from said side edge (26:300') is always spaced from the plane of pressure, characterised in that said pressure is applied initially against the sheets (22, 30:300, 310) proximate to but spaced from said side edge (26:300') to squeeze adhesive towards the said side edge (26:300') filling any gap between the sheets between the position of initial pressure application and said side edge (26:300').

2. A process as claimed in claim 1, characterised in that the liquid radiation-curable adhesive composition is also distributed on the surface of said one sheet (22:300) along a portion thereof extending along part of the length thereof.

3. A process as claimed in claim 1, characterised in that the liquid adhesive composition distributed on the surface of one of the sheets comprises a ribbon of adhesive (24:304) extending across the sheet proximate said side edge (26:300') and a plurality of ribbons (28:306) extending normal or substantially normal to the ribbon (24:304) extending across the sheet in a direction away from said side edge (26:300') at least for a portion of the length of the sheet.

4. A process as claimed in any of the preceding claims, characterised in that the radiation-curable adhesive composition is photopolymerisable.

5. A process as claimed in any of the preceding claims, characterised in that said sheets of material comprise two sheets of glass.

6. A process as claimed in any of claims 1-4, characterised in that the sheets of material comprise said sheet of glass (30, 310) and a transparent sheet of plastics material (22:310).

7. A process as claimed in claim 6, characterised in that said sheet of transparent plastics material (22, 310) comprises PVC, PVB or polyurethane material.

8. A process as claimed in any one of claims 1-4 for the manufacture of laminated glass comprising sheets of glass and a sheet of substrate or interlayer, characterised in that the liquid adhesive composition (24, 28) is distributed on one surface of the sheet of substrate or interlayer (22), one of said sheets of glass (30) is applied to the surface of the sheet of substrate or interlayer (22) carrying the adhesive composition, and the pressure is applied by spaced rollers (34, 36) applied to the surface of the sheet of glass (30) remote the substrate or interlayer (22) and to the surface of the substrate or interlayer (22) remote the sheet of glass (30).

9. A process as claimed in claim 8, characterised in that the substrate or interlayer (22) comprises clear, transparent PVC material.

10. A process as claimed in claim 8 or 9, characterised in that the sheet of substrate or interlayer (22) has a length and width greater than the length and width of the glass sheet (30) with the edges of the substrate (22) extending beyond the side edges of the glass sheet (30) and, upon application of said pressure against the outer surfaces of each of the substrate or interlayer (22) and glass sheet (30), liquid adhesive composition is expressed from between the substrate or interlayer and glass sheet onto the substrate extending beyond the glass sheet.

11. A process as claimed in claim 8, claim 9 or claim 10, characterised in that the substrate or interlayer (22) and glass sheet (30) are disposed in a horizontal plane, the substrate is carried on a carrier (20) and the glass sheet (30) is placed on the top of the substrate or interlayer (22).

12. A process as claimed in claim 11, characterised in that the adhesive film between the glass sheet (30) and substrate or interlayer (22) is irradiated, and the combination is then turned over and the process steps repeated with the application of the second sheet of glass (30a) on top of the substrate or interlayer (22) carrying adhesive and aligned with the bottom sheet of glass (30).

13. A process as claimed in claim 12, characterised in that after the second irradiation with both glass sheets (30, 30a) now secured to the substrate or interlayer (22), the edges of the substrate or interlayer are trimmed and finished.

14. A process as claimed in any of claims 1-4 and suitable for joining two sheets of glass (30, 30a:300, 302), with or without the interposition of an interlayer (22, 310), in which the pressure is applied to said sheets by spaced rollers (34, 36), and said sheets tend to separate at the edges thereof when subjected to pressure at the centre of the sheets, characterised in that said side edges (26:300', 302') of the sheets (30, 30a:300, 302) and the adhesive (24, 28:304, 306) therebetween are irradiated to cure the adhesive prior to pressure being applied by the rollers to the centres of the sheets upon relative movement between the sheets and the rollers.

15. A process as claimed in any of claims 1-4 for the manufacture of laminated glass comprising two sheets of glass (300, 302) and a sheet of a substrate or interlayer (310) therebetween, characterised in that the adhesive composition is distributed on one of the surfaces of each of the two sheets of glass proximate a side edge (300', 302') of each, the substrate or interlayer (310) is applied on one of the sheets of glass, the substrate is sandwiched between the sheets of glass with the side edges (300', 302') proximate which the adhesive was applied aligned with one another, said pressure is applied against the surfaces of the glass sheets (330, 302) remote the interlayer (310) substantially normal to the planes of the glass sheets, while effecting relative movement between the sheets and the plane of pressure, to form said continuous film of adhesive between each sheet and the substrate, and said pressure is applied initially against each of the sheets proximate to but spaced from said side edges (300, 302') to force adhesive towards the side edges (300, 302') filling the gap between the substrate (310) and each of the glass sheets between the position of the initial application of pressure and the side edges (300', 302').

16. A process as claimed in claim 15, characterised in that the glass sheets (300, 302) are placed side by side in a horizontal plane with each sheet having an inner edge (312, 314) closer the other sheet, and an outer edge (300', 302'), the liquid adhesive (304) is applied to the top surface of each sheet proximate said outer side edge (300', 302') and, after the substrate (310) is applied to one of the sheets of glass, the glass sheets are pivoted about their inner edges in a vertical direction for sandwiching the substrate between the glass sheets, and the combination is fed vertically through a series of pressure rollers (320, 322) oriented with their axes extending horizontally.

17. A process as claimed in claim 15, characterised in that the glass sheets (300, 302) are placed side by side in a horizontal plane with side edges thereof (200', 302') in alignment, the liquid adhesive (304) is applied to the top surface of each sheet proximate said aligned side edges (300', 302') and, after the substrate (310) is applied to one of the sheets of glass, the glass sheets are pivoted about their adjacent edges (312, 314) in a vertical direction for sandwiching the substrate between the glass sheets, and the combination is fed horizontally through a series of pressure rollers (320, 322) orientated with their axes extending vertically.

18. Apparatus for carrying out the process of claim 1 of joining sheets of material, one of which is a glass sheet, by liquid radiation-curable adhesive composition distributed on a surface of one of the sheets at least proximate one side edge (26) thereof across the sheet, the apparatus comprising a pair of opposing rollers (34, 36) for applying pressure to said sheets in a plane of pressure substantially normal to the planes of the sheets, a conveyor (32) for feeding the sheets between the rollers with said side edge (26) parallel to the rollers and forming part of the leading edge of the moving sheets, drive means (112, 118; 146, 152) operable to rotate said rollers to move the sheets through said plane of pressure while the rollers apply pressure to said sheets, and radiation generating means (56:140) arranged to cure the adhesive composition by irradiation after passage through said plane of pressure, characterised by a control system for causing the rollers to be separated to permit the sheets to be positioned in the plane of pressure and thereafter to apply the rollers against the sheets proximate to but spaced from and parallel to the leading edge thereof.

19. The apparatus of claim 18 characterised in that one roller (34) is moveable towards and away from the other roller (36) by an L-shaped roller pivot arm or lever (162) pivotable about a pivot point (160), one end of the arm or lever being secured to the moveable roller (34) and the other end of the arm or lever being secured to a cylinder (168) operable to pivot the arm or lever about the pivot point (160).

20. The apparatus of claim 19 characterised in that the drive means comprises at least one pair of driven gears (146, 150:148, 152), one driven gear of each pair being secured to each roller, with each driven gear driven by a separate one of a pair of meshed drive gears (154, 156), meshed with one another for driving the driven gears (146, 150:148, 152), the centre of rotation of the drive gear (154) which is drivably connected to the driven gear (146) on the movable roller coinciding with said pivot point (160).

21. The apparatus of claim 19 or 20 characterised in that the cylinder (168) comprises an air cylinder.

22. The apparatus of claim 21 characterised in that it further comprises cam means (232) to pivot the L-shaped roller pivot arm or lever (162) about the pivot point for quickly spacing the rollers (34, 36) relative to one another from a preset opening or spacing therebetween and for restoring the rollers to their predetermined position spaced by the preset opening and wherein said cam means (232) is controlled by an air cylinder (216) to pivot the L-shaped roll pivot arm (162).

**Patentansprüche**

1. Verfahren zum Zusammenfügen von Materialbahnen (22, 30:300, 310), wobei mindestens eine Bahn (30:300) eine Glasbahn ist, wobei das Verfahren die Schritte der Verteilung einer flüssigen, strahlungshärtbaren Kleberverbindung (24, 28:304, 306) auf der einen Fläche einer der Bahnen (22:300) mindestens nahe der einen Seitenkante (26:300′) über die Bahn hinweg, der Aufbringung einer anderen der Bahnen (30: 310) auf die kleberbeschichtete Bahn (22, 300) und des Aufbringens von Druck in einer Ebene im wesentlichen senkrecht zur Ebene der Bahnen und parallel zur genannten einen Kante (26; 300′) umfaßt, während man eine Relativbewegung zwischen den Bahnen und der Ebene des Drucks bewirkt, um den Kleber längs der Bahnen von der Ebene der Druckaufbringung auf der Seite der Ebene der Druckaufbringung von der Seitenkante (26:300′) weg zu quetschen, um einen durchgehenden Kleberfilm zu bilden, während man sicherstellt, daß die Kante des Films auf der von der Seitenkante (26:300′) abgelegenen Seite der Druckebene stets einen Abstand zur Druckebene aufweist, dadurch gekennzeichnet, daß der Druck anfangs gegen die Bahnen (22, 30:300, 310) nahe der einen Seitenkante (26:300′), jedoch mit Abstand zu dieser aufgebracht wird, um den Kleber zur genannten Seitenkante (26:300′) zu quetschen, der dann jeden Spalt zwischen den Bahnen zwischen der Lage der ursprünglichen Druckaufbringung und der Seitenkante (26:300′) füllt.

2. Verfahren nach Anspruch 1, dadurch gekennzeichnet, daß die flüssige, strahlungshärtbare Kleberverbindung auch auf der Oberfläche der genannten einen Bahn (22:300) längs eines Abschnitts hiervon verteilt wird, der sich längs eines Teiles der Länge hiervon erstreckt.

3. Verfahren nach Anspruch 1, dadurch gekennzeichnet, daß die flüssige Kleberverbindung, die auf der Oberfläche einer der Bahnen verteilt wird, ein Kleberband (24:304) aufweist, das sich quer über die Bahn nahe der einen Seitenkante (26:300′) erstreckt, sowie mehrere Bänder (28:306), die sich senkrecht oder im wesentlichen senkrecht zum Band (24:304) erstrecken, und sich quer über die Bahn in einer Richtung von der genannten Seitenkante (26:300′) wegmindestens für einen Teil der Länge der Bahn erstrecken.

4. Verfahren nach jedem der vorangehenden Ansprüche, dadurch gekennzeichnet, daß die strahlungshärtbare Kleberverbindung photopolymerisierbar ist.

5. Verfahren nach jedem der vorangehenden Ansprüche, dadurch gekennzeichnet, daß die Materialbahnen zwei Glasbahnen aufweisen.

6. Verfahren nach jedem der Ansprüche 1 bis 4, dadurch gekennzeichnet, daß die Materialbahnen die genannte Glasbahn (30, 310) und eine transparente Kunststoff-Materialbahn (22: 310) aufweisen.

7. Verfahren nach Anspruch 6, dadurch gekennzeichnet, daß die Bahn aus transparentem Kunststoff-Material (22, 310) PVC-, PVB- oder Polyurethan-Material aufweist.

8. Verfahren nach jedem der Ansprüche 1 bis 4 für die Herstellung laminierter glashaltiger Bahnen aus Glas und einer Substrat- oder Zwischenlagenbahn, dadurch gekennzeichnet, daß die flüssige Kleberverbindung (24, 28) auf der einen Oberfläche der Substrat- oder Zwischenlagenbahn (22) verteilt wird, daß eine der Glasbahnen (30) auf die Oberfläche der Substrat- oder Zwischenlagenbahn (22) aufgebracht wird, welche die Kleberverbindung trägt, und daß Druck durch mit Abstand angeordnete Walzen (34, 36) auf die Oberfläche der Glasbahn (30) aufgebracht wird, die von dem Substrat oder der Zwischenlage (22) entfernt ist, und auf jene Oberfläche des Substrats oder der Zwischenlage (22), die von der Glasbahn (30) entfernt ist.

9. Verfahren nach Anspruch 8, dadurch gekennzeichnet, daß das Substrat oder die Zwischenlage (22) klares, transparentes PVC-Material aufweist.

10. Verfahren nach Anspruch 8 oder 9, dadurch gekennzeichnet, daß die Substrat- oder Zwischenlagenbahn (22) eine Länge und Breite aufweist, die größer ist als die Länge und Breite der Glasbahn (30), wobei sich die Kanten des Substrats (22) über die Seitenkanten der Glasbahn (30) erstrecken, und daß nach der Aufbringung des Drucks gegen die Außenoberflächen einer jeden von Substrat oder Zwischenlage (22) und Glasbahn (30) flüssige Kleberverbindung aus dem Bereich zwischen dem Substrat oder der Zwischenlage und der Glasbahn auf jenes Substrat ausgepreßt wird, das sich über die Glasbahn hinaus erstreckt.

11. Verfahren nach Anspruch 8, 9 oder 10, dadurch gekennzeichnet, daß das Substrat oder die Zwischenlage (22) und die Glasbahn (30) in einer horizontalen Ebene angeordnet sind, das Substrat auf einem Träger (20) getragen ist und die Glasbahn (30) auf die Oberseite des Substrats oder der Zwischenlage (22) aufgelegt wird.

12. Verfahren nach Anspruch 11, dadurch gekennzeichnet, daß der Kleberfilm zwischen der Glasbahn (30) und dem Substrat oder der Zwischenlage (22) bestrahlt wird, und daß die kombinierte Anordnung dann umgedreht und die Prozeßstufen mit Aufbringung einer zweiten Glasbahn (30a) auf die Oberseite von Substrat oder Zwischenlage (22) wiederholt wird, die Kleber trägt, und auf die untenliegende Glasbahn (30) ausgerichtet wird.

13. Verfahren nach Anspruch 12, dadurch gekennzeichnet, daß nach der zweiten Bestrahlung, wobei beide Glasbahnen (30, 30a) nun am Substrat oder der Zwischenlage (22) befestigt sind, die Kanten von Substrat oder Zwischenlage zugeschnitten und endbearbeitet werden.

14. Verfahren nach jedem der Ansprüche 1 bis 4 und geeignet zum Zusammenfügen zweier Glasbahnen (30, 30a:300, 302) mit oder ohne Einschieben einer Zwischenlage (22, 310), wobei der Druck auf die beiden Bahnen durch mit Abstand angeordnete Walzen (34, 36) aufgebracht wird und die Bahnen danach trachten, sich an den Kanten abzutrennen, wenn sie dem Druck in der Mitte der Bahnen ausgesetzt sind, dadurch gekennzeichnet, daß die Seitenkanten (26:300', 302') der Bahnen (30, 30a:300, 302) und der Kleber (24, 28:304, 306) dazwischen bestrahlt werden, um den Kleber auszuhärten, bevor der Druck von den Walzen auf die Mitten der Bahnen nach der Relativbewegung zwischen Bahnen und Walzen aufgebracht wird.

15. Verfahren nach jedem der Ansprüche 1 bis 4 zur Herstellung laminierten Glases, das zwei Glasbahnen (300, 302) und eine Substrat- oder Zwischenlagebahn (310) hierzwischen aufweist, dadurch gekennzeichnet, daß eine Kleberverbindung auf eine der Oberflächen einer jeden der beiden Glasbahnen nahe einer Seitenkante (300', 302') einer jeden verteilt wird, das Substrat oder die Zwischenlage (310) auf eine der Glasbahnen aufgebracht wird, das Substrat sandwichartig zwischen die Glasbahnen eingeschlossen wird, wobei die Seitenkanten (300', 302'), nahe denen der Kleber aufgebracht wurde, aufeinander ausgerichtet werden, der Druck gegen die Oberflächen der Glasbahnen (330, 302) fern der Zwischenlage (310) im wesentlichen senkrecht zu den Ebenen der Glasbahnen aufgebracht wird, während man eine Relativbewegung zwischen den Bahnen und der Druckebene bewirkt, um einen kontinuierlichen Kleberfilm zwischen jeder Bahn und dem Substrat zu bilden, und der Druck zunächst gegen jede der Bahnen nahe den Seitenkanten (300, 302'), jedoch mit Abstand zu diesen aufgebracht wird, um den Kleber zu den Seitenkanten (300, 302') hin zu pressen, so daß er den Spalt zwischen dem Substrat (310) und jeder der Glasbahnen zwischen der Lage der ursprüng-lichen Aufbringung des Drucks und den Seitenkanten (300', 302') ausfüllt.

16. Verfahren nach Anspruch 15, dadurch gekennzeichnet, daß die Glasbahnen (300, 302) nebeneinanderliegend in einer horizontalen Ebene angeordnet werden, wobei jede Bahn eine Innenkante (312, 314) aufweist, die der anderen Bahn nähergelegen ist, sowie eine Außenkante (300', 302'), der flüssige Kleber (304) auf die obere Oberfläche einer jeden Bahn nahe der äußeren Seitenkante (300', 302') aufgebracht wird und, nachdem das Substrat (310) auf eine der Glasbahnen aufgebracht wurde, die Glasbahnen um ihre Innenkanten in vertikaler Richtung geschwenkt werden, um das Substrat sandwichartig zwischen den Glasbahnen einzuschließen, und die kombinierte Anordnung vertikal durch eine Reihe von Druckwalzen (320, 322) hindurchgeführt wird, die so ausgerichtet sind, daß sich ihre Achsen horizontal erstrecken.

17. Verfahren nach Anspruch 15, dadurch gekennzeichnet, daß die Glasbahnen (300, 302) nebeneinanderliegend in einer horizontalen Ebene angeordnet sind, wobei ihre Seitenkanten (200', 302') aufeinander ausgerichtet sind, der flüssige Kleber (304) auf die obere Oberfläche einer jeden Bahn nahe den ausgerichteten Seiten Kanten (300', 302') aufgebracht wird und, nachdem das Substrat (310) auf eine der Glasbahnen aufgebracht wurde, die Glasbahnen um ihre benachbarten Kanten (312, 314) in vertikaler Richtung geschwenkt werden, um das Substrat sand-wichartig zwischen den Glasbahnen einzuschlie-

ßen, und die kombinierte Anordnung horizontal durch eine Reihe von Druckwalzen (320, 322) hindurchgeführt wird, die so ausgerichtet sind, daß sich ihre Achsen vertikal erstrecken.

18. Vorrichtung zum Durchführen des Verfahrens des Anspruchs 1 zum Zusammenfügen von Materialbahnen, von welchen eine eine Glasbahn ist, mittels einer strahlungshärtbaren Kleberverbindung, die auf eine Oberfläche einer der Bahnen mindestens nahe einer Seitenkante (26) hiervon über die Bahn hinweg verteilt wird, wobei die Vorrichtung ein Paar gegenüberliegender Walzen (34, 36) aufweist, um Druck auf die Bahnen in einer Druckebene aufzubringen, die im wesentlichen senkrecht zu den Ebenen der Bahnen verläuft, eine Fördereinrichtung (32) zum Zuführen der Bahnen zwischen den Walzen, wobei die Seitenkante (26) parallel zu den Walzen steht und einen Teil der Vorderkante der sich bewegenden Bahnen bildet, eine Antriebseinrichtung (112, 118; 146, 152), die zum Drehen der Walzen betreibbar ist, um die Bahnen durch die Druckebene hindurchzubewegen, während die Walzen Druck auf die Bahnen ausüben, und eine Strahlungserzeugungseinrichtung (56:140), die so angeordnet ist, daß sie die Kleberverbindung durch Strahlung nach dem Durchgang durch die Druckebene aushärtet, gekennzeichnet durch eine Steuereinrichtung, um die Walzen zu veranlassen, voneinander getrennt zu werden, um es den Bahnen zu ermöglichen, in der Druckebene angeordnet zu werden, und um nachfolgend die Walzen gegen die Bahnen nahe deren Vorderkante und parallel zu dieser, jedoch mit Abstand zu dieser aufzubringen.

19. Vorrichtung nach Anspruch 18, dadurch gekennzeichnet, daß eine Walze (34) zur anderen Walze (36) hin und von dieser weg mittels eines L-förmigen Walzen-Schwenkarmes oder Hebels (162) bewegbar ist, der um einen Schwenkpunkt (160) schwenkbar ist, und daß ein Ende des Armes oder Hebels an der beweglichen Walze (34) und das andere Ende des Armes oder Hebels an einem Zylinder (168) befestigt ist, der zum Schwenken des Armes oder Hebels um den Schwenkpunkt (160) betreibbar ist.

20. Vorrichtung nach Anspruch 19, dadurch gekennzeichnet, daß die Antriebseinrichtung mindestens ein Paar angetriebener Zahnräder (146, 150:148, 152) aufweist, ein angetriebenes Zahnrad eines jeden Paares an jeder Walze befestigt ist, wobei jedes angetriebene Zahnrad von einem eigenen eines Paars kämmender Antriebszahnräder (154, 156) angetrieben wird, die miteinander zum Antreiben der angetriebenen Zahnräder (146, 150:148, 152) kämmen, und die Mitte der Drehung jenes Antriebszahnrades (154), das in Antriebsverbindung mit dem angetriebenen Zahnrad (146) an der beweglichen Walze steht, mit dem Schwenkpunkt (160) zusammenfällt.

21. Vorrichtung nach Anspruch 19 oder 20, dadurch gekennzeichnet, daß der Zylinder (168) einen Luftzylinder aufweist.

22. Vorrichtung nach Anspruch 21, dadurch gekennzeichnet, daß sie ferner eine Nockeneinrichtung (232) zum Schwenken des L-förmigen Schwenkarmes oder Hebels (162) um den Schwenkpunkt aufweist, um die Walzen (34, 36) relativ zueinander aus einer vorgegebenen Öffnung oder Abstandslage zwischeneinander rasch auf Abstand zu bringen und um die Walzen in ihre bstimmte Lage zurückzubringen, in welcher sie um die vorgegebene Öffnung voneinander getrennt sind, und wobei die Nockeneinrichtung (232) durch einen Luftzylinder (216) gesteuert wird, um den L-förmigen Walzen-Schwenkarm (162) zu schwenken.

## Revendications

1. Procédé de jonction de feuilles de matière (22, 30:300, 310) les unes aux autres, au moins l'une de ces feuilles (30:300) étant une feuille de verre, le procédé comprenant les opérations de distribution d'une composition adhésive liquide durcissable par irradiation (24, 28:304, 306) sur une surface d'une des feuilles (22:300) au moins près d'un bord latéral (26:300') en travers de la feuille, d'application d'une autre desdites feuilles (30:310) sur la feuille recouverte d'adhésif (22, 300), et d'application de pression dans un plan sensiblement perpendiculaire au plan des feuilles et parallèle audit bord latéral (26:300') tout en effectuant un mouvement relatif entre les feuilles et le plan de pression de manière à chasser l'adhésif le long des feuilles et à l'éloigner du plan d'application de pression, du côté du plan d'application de pression à l'opposé dudit bord latéral (26:300'), pour former un film continu d'adhésif tout en assurant que le bord du film, du côté du plan de pression à l'opposé dudit bord latéral (26:300'), est toujours espacé du plan de pression, caractérisé en ce que ladite pression est appliquée initialement contre les feuilles (22, 30:300, 310) à proximité mais à une certaine distance dudit bord latéral (26:300') pour chasser l'adhésif vers ledit bord latéral (26:300') de manière à remplir tout intervalle entre les feuilles, entre la position d'application initiale de pression et ledit bord latéral (26:300').

2. Procédé suivant la revendication 1, caractérisé en ce que la composition adhésive liquide durcissable par irradiation est également distribuée sur la surface de ladite feuille (22:300), le long d'une partie de la feuille s'étendant sur une partie de sa longueur.

3. Procédé suivant la revendication 1, caractérisé en ce que la composition adhésive liquide distribuée sur la surface d'une des feuilles comprend un ruban d'adhésif (24:304) s'étendant en travers de la feuille près dudit bord latéral (26:300') et une pluralité de rubans (28:306) s'étendant perpendiculairement ou sensiblement perpendiculairement au ruban (24:304) et s'étendant en travers de la feuille dans une direction opposée audit bord latéral (26:300') au moins sur une partie de la longueur de la feuille.

4. Procédé suivant l'une quelconque des revendications précédentes, caractérisé en ce que la composition adhésive durcissable par irradiation est photopolymérisable.

5. Procédé suivant l'une quelconque des revendications précédentes, caractérisé en ce que lesdites feuilles de matière comprennent deux feuilles de verre.

6. Procédé suivant l'une quelconque des revendications 1 à 4, caractérisé en ce que les feuilles de matière comprennent ladite feuille de verre (30:310) et une feuille transparente de matière plastique (22:310).

7. Procédé suivant la revendication 6, caractérisé en ce que ladite feuille de matière plastique transparente (22:310) est en PVC, PVB ou polyuréthanne.

8. Procédé suivant l'une quelconque des revendications 1 à 4 pour la fabrication de verre feuillete comprenant des feuilles de verre et une feuille de substrat ou couche intermédiaire, caractérisé en ce que la composition adhésive liquide (24, 28) est distribuée sur une surface de la feuille de substrat ou de couche intermédiaire (22), une desdites feuilles de verre (30) est appliquée à la surface de la feuille de substrat ou de couche intermédiaire (22) portant la composition adhésive, et la pression est appliquée par des rouleaux espacés (34, 36) en contact avec la surface de la feuille de verre (30) à l'opposé du substrat ou de la couche intermédiaire (22) et avec la surface du substrat ou dela couche intermédiaire (22) à l'opposé de la feuille de verre (30).

9. Procédé suivant la revendication 8, caractérisé en ce que le substrat ou couche intermédiaire (22) est en chlorure de polyvinyle transparent clair.

10. Procédé suivant la revendication 8 ou 9, caractérisé en ce que la feuille de substrat ou couche intermédiaire (22) a une longueur et une largeur plus grandes que la longueur et la largeur de la feuille de verre (30), les bords du substrat (22) s'étendant audelà des bords latéraux de la feuille de verre (30), et, lors de l'application de ladite pression contre les surfaces extérieures de chacune de la feuille de substrat ou couche intermédiaire (22) et de la feuille de verre (30), de la composition adhésive liquide est chassée d'entre le substrat ou couche intermédiaire et la feuille de verre, sur le substrat s'étendant au-delà de la feuille de verre.

11. Procédé suivant la revendication 8, la revendication 9 ou la revendication 10, caractérisé en ce que le substrat ou couche intermédiaire (22) et la feuille de verre (30) sont disposés dans un plan horizontal, le substrat est porté sur un élément porteur (20) et la feuille de verre (30) est placée sur le dessus du substrat ou couche intermédiaire (22).

12. Procédé suivant la revendication 11, caractérisé en ce que le film adhésif entre la feuille de verre (30) et le substrat ou couche intermédiaire (22) est irradié, et l'ensemble est ensuite retourné et les opérations sont répétées avec application de la deuxième feuille de verre (30a) sur le dessus du substrat ou couche intermédiaire (22) portant l'adhésif et en alignement avec la feuille de verre inférieure (30).

13. Procédé suivant la revendication 12, caractérisé en ce que, après la deuxième irradiation et les deux feuiiles de verre (30, 30a) étant maintenant fixées au substrat ou couche intermédiaire (22), les bords du substrat ou couche intermédiaire sont ajustés en dimension et finis.

14. Procédé suivant l'une quelconque des revendications 1 à 4 et approprié à la jonction de deux feuilles de verre (30, 30a:300, 302), avec ou sans interposition d'une couche intermédiaire (22:310), dans lequel la pression est appliquée auxdites feuilles par des rouleaux espacés (34, 36) et lesdites feuilles tendent à se séparer à l'endroit de leurs bords lorsqu'elles sont soumises à une pression au centre des feuilles, caractérisé en ce que lesdits bords latéraux (26:300', 302') des feuilles (30, 30a:300, 302) et l'adhésif (24, 28:304, 306) entre ces bords sont irradiés pour durcir l'adhésif avant l'application de pression par les rouleaux aux centres des feuilles lors du mouvement relatif entre les feuilles et les rouleaux.

15. Procédé suivant l'une quelconque des revendications 1 à 4, pour la fabrication de verre feuilleté comprenant deux feuilles de verre (300, 302) entre lesquelles est interposée une feuille d'un substrat ou couche intermédiaire (310), caractérisé en ce que la composition adhésive est distribuée sur une des surfaces de chacune des deux feuilles de verre près d'un bord latéral (300', 302') de chaque feuille, le substrat ou couche intermédiaire (310) est appliqué sur une des feuilles de verre, le substrat est interposé entre les feuilles de verre de sorte que les bords latéraux (300', 302') près desquels l'adhésif a été appliqué sont mutuellement alignés, ladite pression est appliquée contre les surfaces des feuilles de verre (330, 302) à l'opposé de la couche intermédiaire (310) sensiblement perpendiculairement aux plans des feuilles de verre, tout en effectuant un mouvement relatif entre les feuilles et le plan de pression, pour former ledit film continu d'adhésif entre chaque feuille et le substrat, et ladite pression est appliquée initialement contre chacune des feuilles à proximité mais à une certaine distance desdits bords latéraux (300, 302') pour forcer l'adhésif vers les bords latéraux (300, 302') afin de remplir l'intervalle entre le substrat (310) et chacune des feuilles de verre, entre la position de l'application initiale de pression et les bords latéraux (300', 302').

16. Procédé suivant la revendication 15, caractérisé en ce que les feuilles de verre (300, 302) sont placées côte-à-côte dans un plan horizontal de sorte que chaque feuille présente un bord intérieur (312, 314) plus proche de l'autre feuille et un bord extérieur (300', 302'), l'adhésif liquide (304) est appliqué à la surface supérieure de chaque feuille près dudit bord latéral extérieur (300', 302') et, après application du substrat (310) sur l'une des feuilles de verre on fait pivoter les feuilles de verre autour de leurs bords intérieurs dans une direction verticale pour emprisonner le substrat entre les feuilles de verre, et on déplace l'ensemble verticalement à travers une série de rouleaux de pression (320, 322) dont les axes sont orientés horizontalement.

17. Procédé suivant la revendication 15, caractérisé en ce que les feuilles de verre (300, 302) sont placées côte-a-côte dans un plan horizontal avec leurs bords latéraux (300', 302') en alignement, l'adhésif liquide (304) est appliqué à la surface supérieure de chaque feuille près desdits bords latéraux alignés (300', 302') et, après application du substrat (310) à l'une des feuilles de verre, on fait pivoter les feuilles de verre autour de leurs bords adjacents (312, 314) dans une direction verticale pour emprisonner le substrat entre les feuilles de verre, et on déplace l'ensemble horizontalement à travers une série de rouleaux de pression (320, 322) dont les axes sont orientés verticalement.

18. Dispositif pour la mise en oeuvre du procédé suivant la revendication 1, pour a jonction de feuilles de matière, dont l'une est une feuille de verre, par une composition adhésive liquide durcissable par irradiation distribuée sur une surface d'une des feuilles, au moins près d'un bord latéral (26) de la feuille et en travers de la feuille, le dispositif comprenant deux rouleaux opposés (34, 36) pour appliquer une pression aux dites feuilles dans un plan de pression sensiblement perpendiculaire aux plans des feuilles, un transporteur (32) pour faire avancer les feuilles entre les rouleaux de sorte que ledit bord latéral (26) est parallèle aux rouleaux et fait partie du bord de tête des feuilles en déplacement, des moyens d'entraînement (112, 118; 146, 152) qui agissent pour mettre en rotation lesdits rouleaux afin de déplacer les feuilles à travers ledit plan de pression pendant que les rouleaux appliquent une pression auxdites feuilles, et des moyens de production d'un rayonnement (56:140) agencés pour durcir la composition, à adhesive par irradiation après passage travers ledit plan de pression, caractérisé en ce qu'il comprend un système de commande pour provoquer l'écartement des rouleaux, afin de permettre la mise en position des feuilles dans le plan de pression puis l'application des rouleaux contre les feuilles, à proximité mais à une certaine distance de leur bord de tête et parallèlement à celui-ci.

19. Dispositif suivant la revendication 18, caractérisé en ce qu'un rouleau (34) peut être rapproché et éloigné de l'autre rouleau (36) par un levier ou bras de rouleau en forme de L (162) qui peut pivoter autour d'un axe (160), une extrémité du bras ou du levier étant fixée au rouleau mobile (34) et l'autre extrémité du bras ou du levier étant reliée à un vérin (168) qui agit de manière à faire pivoter le bras ou le levier autour de l'axe (160).

20. Dispositif suivant la revendication 19, caractérisé en ce que les moyens d'entraînement comprennent au moins une paire de pignons entraînés (146, 150:148, 152), un pignon entraîné de chaque paire étant fixé à chaque rouleau, chaque pignon entraîné étant entraîné par un pignon séparé faisant partie d'une paire de pignons d'entraînement en prise (154, 156), qui engrènent l'un avec l'autre pour entraîner les pignons entraînés (146, 150:148, 152), le centre de rotation du pignon d'entraînement (154) qui est en prise d'entraînement avec le pignon entraîné (146) sur le rouleau mobile coïncidant avec ledit axe de pivotement (160).

21. Dispositif suivant la revendication 19 ou 20, caractérisé en ce que le vérin (168) est un vérin pneumatique.

22. Dispositif suivant la revendication 21, caractérisé en ce qu'il comprend en outre des moyens à came (232) pour faire pivoter le levier ou le bras du rouleau en L (162) autour de l'axe de pivotement de manière à écarter rapidement les rouleaux (34, 36) l'un de l'autre à partir d'une ouverture ou d'un écartement préréglé entre eux, et de manière à ramener les rouleaux à leur position prédéterminée, espacés par l'ouverture préréglée, et dans lequel lesdits moyens à came (232) sont commandés par un vérin pneumatique (216) pour faire pivoter le bras de rouleau en L (162).

FIG . 1.

FIG . 2.

FIG . 3.

FIG.4.

FIG.5.

FIG.6.

FIG. 7.

FIG. 8.

FIG.9.

EP 0 108 632 B1

FIG.10.

EP 0 108 632 B1

FIG. 12.

FIG.13.

EP 0 108 632 B1

FIG. 14.

FIG.15.

EP 0 108 632 B1

FIG.16.

216

218

217

219

201

204

FIG.17.

400

FIG. 18.

FIG .19.

FIG. 20.

FIG. 21.

83

FIG. 22.

85

FIG. 23.

81

FIG. 24.

FIG. 25.

EP 0 108 632 B1